# EUROPEAN PATENT APPLICATION

(11) **EP 1 665 929 A1**
(43) Date of publication of application: **07.06.2006**
(21) Application number: 04731193.1
(22) Date of filing: 05.05.2004
(51) Int. Cl.: A01M 7/00, B05B 3/10

(54) **IMPROVEMENTS TO LOW-VOLUME SPRAYERS**

(30) Priority: 12.08.2003 ES 200301993
(71) Applicant: Sistemas y Homologaciones de Promoción y Desarrollo, S.L., 46160 Lliria (ES)
(72) Inventor: SANZ PÉREZ, Alfonso, E-46185 La Pobla de Vallbona, Valencia (ES)
(74) Representative: Sanz-Bermell Martinez, Alejandro
(86) International application number: PCT/ES2004/000200
(87) International publication number: WO 2005/015992

(57) **Abstract**

The invention relates to improvements to low-volume sprayers which are intended for the application of phytosanitary and herbicide products. The inventive sprayer consists of: a container (18), a lance (6) comprising a handle (2) with compartments for batteries (1), and a dispensing head set (8) housing the motor (25) which actuates the distributor rotor (9). The aforementioned rotor can take the form of a double rotor (32), a rotor with wings (28), a conical rotor (34) or a cylindrical rotor (37) which can be fixed using a nut (42) and bolt (40) system. According to the invention, the liquid reaches the rotor through a calibrated tip (11) after passing through a distribution chamber (22). The threaded part to hold the container comprises a control element with the electric motor switch and the valves used to control the passage of the fluid to the distributor and the container vent. The invention further comprises a protective hood (10) which is secured by a tie rod (12) which is used to adjust the position thereof and which strengthens the assembly.

## Description

### Aim of the invention

This invention regards to a series of improvements in the design of low volume sprayers, which improve their operation and which due to their configuration and characteristics, improve substantially the existing antecedents in the frame of the industrial property and in the current market.

The improvements concern those sprayers which are located in motor vehicles or towed, and those in which the sprayer is carried by the user which does the work manually (sprayers in which the tank is placed on the user's back or sprayers in which such tank is directly assembled on the spraying lance). The application of this low volume sprayer is known in different fields, but its use in the application of pesticides in general and weed-killer in particular stands out.

The improvements in this ultra low volume sprayers focus on the air inlet for the tank when it's connected directly into the spraying system; in the system to fix and to regulate the position of a temporary protective hood for its use in sensitive crops, in the diffusion chamber and the discs of distribution, and in the system of subjection of such discs to the sprayer's motor ensemble.

### Invention records

As it has been said, the ultra low volume sprayers are used with profusion for the application of pesticide products. These sprayers are characterised by their ability to spray liquid with droplets of small, even and controlled size. To obtain this purpose, the system commonly used is the one of a distributor rotor that, by means of the rotation's effect, distributes the liquid to spray by centrifuge action. This way, the droplets form in order of the flow rate provided, the angular speed of rotation of the rotor, the viscosity of the fluid...

As it has been said, it's feasible for the low volume sprayer to be carried by a motor vehicle, towed, to pedals, etc though commonly it consists of a lance with application head and of their complements that are carried by the user, who moves on foot to carry out the application of the liquid product. In this case, the normal configuration is the one of a lance that is hold from one side, and that in its opposite side has an electric motor that makes a disk to turn. The fluid moves from the tank to the calibrated nozzle, placed near the motor and in a lower level, and that as a last resort flows into the rotating distributor disc.

As things have been said previously, the low volume sprayers are used in agriculture for many years, since the application of liquids in reduced quantities present several advantages, such as the water saving, more effectiveness in the work, security for the user, etc...

Usually, the product to spray is prepared previously before its application:
diluting it if it's a solid product, or reducing its concentration if it's a liquid product. This operation must be done in each recharge process of the tank that feeds the distributor system, which results in a waste of time and energy. This extra manipulation of the product to distribute can also mean (depending on the danger of the product in question) an added risk for the user.

To solve these problems, sometimes not diluted liquid product is applied, just as it's presented commercially. In the case of the pesticides, the application of pure product has an added advantage, since it strengthens the action over the pests, accelerating and improving its effectiveness. This way, it's not necessary to have great volumes of water, avoiding carrying it till the application spot; a lightness of the spraying equipment is also obtained, since the capacity of the tank can be reduced without involving the autonomy of work. In these cases, the tank of the weed-killer product can be connected directly into the sprayer's lance, without previous preparation and without using a different auxiliary tank.

The application of pure product requires innovative technical solutions, since it presents difficulties like the ones related with the fluid's density and viscosity.

On the other hand, for the use of sprayers in the control of certain pests of sensitive crops, different means which guarantee that the plaguicide doesn't reach the crop have been used; either because it's in the initial stages of its development or because it presents a special sensitivity to the plaguicide product used. Between these means, it stands out the use of a protective hood that avoids to a great extent that the sprayed droplets reach the crop's exposed parts.

### Description of the improvements of this invention

In accordance with the things pointed out in previous paragraphs, the object of this patent is focused in improvements which affect perceptibly the functionality of this type of sprayers, improving its operation and increasing the effectiveness of the product applied with this sprayers, which clearly improves when the air inlet for the tank improves technically since it's installed directly into the own spraying system (what could be designated as vent).

When non-diluted product is used, and runs on the distributor rotor by gravity, due to practice matters, the tank of the product to apply is placed inclined, with the exit of the fluid in the bottom part, which brings up a difficulty when it comes to facilitate the entrance of air necessary to allow the gradual and constant emptiness of the aforementioned tank. In the current state of the constructive technique, sometimes this is resolved perforating the upper part of the tank with a punch, which brings up the known problems of fluid escapes through such vent, which result in dirtiness of the work equipment and in a risk of contamination of the environment and of the own user. In other cases, this matter is resolved with an adjustment relatively loose of the lid, in such a way that by the depression generated in the emptiness of the tank, the air inlet is forced through the interstices which stay between the lid and the tank of fluid. Therefore, these systems don't allow a sufficiently accurate work with low application doses.

To solve this problem and to improve the sprayer's benefits, this invention proposes an improvement which is focused in providing to the screwed component (which receives the tank of fluid) a vent incorporated to the design of the sprayer itself, of such layout that allows its controlled emptiness and avoids not desired fluid leakages.

The vent in question is constituted of a tube and a valve integrated in the design of the screwed piece which supports (acting also as lid) the fluid tank. The valve that opens or closes the vent is liable to another valve which allows the exit of fluid towards the rotor of distribution, and this set is activated with the same button than the one of the electric circuit's switch.

Both valves have flexible joints, and as it has been said, they are integrated in the same component, which opens or closes the entry of fluids by linear displacement. From the previous description we can gather that when the joint of one of the valves is closing the introduction of fluid, the other one is also doing it. So that the tolerances of manufacturing don't restrict the functionality of the ensemble, one of the flexible joints is torical, while that the other one has been designed with a special configuration. This last joint is essentially flat, with two different thickness, so the greater thickness has been placed in the part placed in the linear component, while that the smaller thickness' correspond to the joint's peripheral, which is the component that holds to the valve's body, closing the flow of fluid. This configuration allows the joint to stay securely close to the linear component, while that the flexibility of the peripheral area (of less thickness), guarantees the security of the closing, so that at the end of the journey of the aforementioned component (which is given by the torical joint), it doesn't damage the correct operation of the set by virtue of the resultant tolerances in the sizes of the pieces which make up such set of valves.

The vent's tube is of small section, and is connected to the correspondent passing valve, that as it has been said, is integrated in a piece that also carries out both functions of lid and fixation of the aforementioned tank of the lance. The other side of the tube extends up to the exterior part of the casing, and communicates with the atmosphere, avoiding this way that some accidental escape of fluid could affect some of the internal elements of the sprayer.

The vent (once the tank is screwed in the working position) allows the air's entrance in a controlled way when the switch that brings the sprayer into operation is activated. For the contrary, the particular layout of the tube in the spraying equipment doesn't allow the exit of fluid, either when the sprayer is working, whatever is the position of the set tank-sprayer.

The operation of the existing sprayers is also determined by the use over sensitive crops, so a system to fix and to regulate the position of a possible hood of protection for the use in these crops has been developed (the fixation and regulation strap of the above-mentioned hood).

As it has been said, some crops are sensitive to the biocide action of the products used in the fight against plagues. Because of this, usually mechanical means that protect the crops are used during the application of the pesticides. The most common is the use of protective hoods, which avoid the sprayed droplets to reach the exposed parts of the crop. The designs of this hoods are very assorted, but they usually have in common the fact that in their interior lodges the distributor rotor that produces the spraying of fluid, while that the rest of the sprayer equipment doesn't suffer important modifications. This way, the hood hitches in its central part to the spraying lance (generally in the surroundings of the spraying head); this fixation is solved by screws or other means of detachable attachment. This way, the hood hitches to the spraying head (which usually is swiveled), so the angular disposition of both components in relation to the lance can be adjusted so that the set of hood and head can be directed by virtue of the characteristics of the surface to treat.

On the normal development of the spraying work, the protective hood is subjected to knocks, rubbings, etc., so that the orientation of the set hood-head can be modified accidentally with relative facility. In addition, the area of attachment of the hood to the spraying equipment suffers intense mechanical efforts that when they generate in the periphery of such hood, they are amplified by the resultant pair of the distance of the application of the effort to the point of union of the protective hood to the spraying lance. The result is that it's hard to keep the hood's work position, and that by the efforts that result of its continuous use, its system of fixation to the spraying equipment can be damaged.

The innovation that is intended to protect resolves these problems in a completely satisfactory way. This way, this invention suggests a fixation system constituted of an adjustable strap that is fixed by a side to the hood, and by the other one, to the spraying lance, complementing the joint between hood and head of distribution, and establishing a triangulation that provides an extraordinary stiffness to the set. This strap is made up of a small section bar (with two holes in its sides), which is fixed to the spraying lance through a bracket that can be made up of two halves essentially symmetrical, that are fixed between them through screws or through another similar mean, one of which also supports a side of the strap, so that at least one screw can come loose or tighten with the fingers of one hand.

In the hood, the joint is located in a peripheral area, providing it of two wings with two holes, so that between them there's one of the strap's sides full of holes. This allows to hitch both elements through a pin or through a screw with nut. As it is gathered of this description, the joints aren't stiff, they are articulated. In addition, as it has been said, the point of fixation of the bracket to the lance can be modified. This way, the angles of triangulation that make up the strap, the hood and the spraying lance vary. The result is a light structure, but highly resistant, which allows to regulate the angular position of the hood in relation to the spraying equipment, reinforcing the fixation of the aforementioned hood of protection.

The use of these sprayers presents, however, other problems which are directly referred to the rotor's action, and so allow defining a new configuration of the diffusion chamber of fluid in the application head and the discs of distribution.

As it has been said, the set of fine and homogeneous droplets is achieved in these sprayers through a distribution rotor. This rotor is provided of rotational movement by virtue of an electric motor that runs on batteries, that in hand operated sprayers are usually lodged in a compartment for this purpose in the same spraying lance. In such cases, the fluid to distribute reaches the disc by gravity in a nearby position to its axis of rotation, through a series of piping elements.

Between these elements there's the racking conduit from the tank till the lance's end, where the motor and rotor are located. The end of such pipe is usually connected to a calibrated nozzle, which diameter of flow limits and regulates the flow rate that reaches the disc of distribution. This is one of the means to control the range and the size of the droplet achieved by the sprayer. At the same time, the nozzle feeds the distribution rotor or leads into an intermediate distribution chamber that takes the fluid up to the aforementioned rotor.

The design of this chamber of distribution is usually solved by placing a small funnel that makes the liquid converge till a spot close to the disc's axis of rotation, which is coaxial to the electric motor. The importance of the design of this distribution chamber is such that determines the formation of the spectrum of sprayed droplets. Nowadays designs usually provide this chamber of smooth walls, which can present the inconvenient that the fluid (that can be of high viscosity) that is injected by gravity in a peripheral spot of this one, reaches the centre in an irregular and asymmetric way, by the apparition of prominent channels that lead fortuitously into the distribution disc, distorting the spectrum of droplets.

To solve this problem, in a previous patent (of which the applicant itself is the owner), improvements in the design of the distribution chamber are suggested. These improvements result in a design of the conical distribution chamber with a regular and concentric stepped design from the upper part where the fluid from the nozzle is injected, till the bottom part near the rotation axis of the distributor disc (nearly ringshaped), which assures that the rotor runs on the nearest part of its rotation axis. This stepped design has the ability to laminate the fluid's flow rate, which means in practice a homogeneous feed to the aforementioned disc, avoiding the pernicious appearance of prominent channels.

This stepped design of the internal surface of the distribution chamber (although it offers adequate benefits), is improvable. This invention refers to a piece essentially conical that is disposed over the previous, between the motor and the surface where the fluid flows by gravity. This complementary piece is designed to improve the fluid's movement from the injection nozzle up to the distribution disc and to protect the electric motor of the harmful action of the fluid and/or its steams. In the one hand, it collaborates to the guiding of the liquid, especially when we work with relatively big flow rates, sharing it adequately through all the internal surface of the distribution chamber and forcing its transit towards the distribution disc. In the other hand, since the component that makes up the distribution chamber is fitted tightly, it avoids efficiently that the liquid or the vapours that eventually can form reach the motor or the electric connections that in work position stay placed over the previous ensemble. Finally, the protuberances that appear in the bottom part, and that once assembled the piece in the set, define hollows of fluid flow towards the distributor disc, have the task of directing the flow and focus the rotation axis in relation to the exit of the chamber of distribution, to achieve a regular feed to the aforementioned distributor rotor.

According to what is described in this report, the operation of a sprayer is more satisfactory if it keeps the requests of formation of the small droplets. To achieve droplets of a suitable and similar size, and to achieve an even distribution of the droplets (all of this considering the viscosity of the product), the most important components are the distribution discs.

The new formulations of liquid products and the different capacities in relation to the treated surface have driven to the development of new models of distribution discs. This patent also refers to a distributor which innovative design presents advantages which make it suitable for the application of fluid of high viscosity in highly reduced flow rates, and that can be described as a distributor rotor of wings. This distributor presents particular characteristics that make it different from the ones which are normally used in the application of pesticides.

The design of the distributor is such, that holds the motor axis in a hollow made up by the space that leave between them multiple equal flat wings that are radial distributed, and that hitch in its bottom part in a disc shape base that gives body to the whole. With the sprayer in working position, the planes of the wings stay vertical (as the axis of rotation), and the viscous fluid reaches the distribution disc through its upper part, draining through the motor axis. Gravity takes the fluid towards the wing's surfaces, which by virtue of the rotation movement to which they are subjugated, lead it up to its edges, where it turns into droplets of the searched size. According to the characteristics of the fluid to distribute and to other elements as the environmental temperature, it may be necessary that the wings present a stepped design on the bottom part (close to the disc shape base) that by centrifugal effect avoids that the fluid reaches such base. The upper part of the wing can be rounded (or not), depending on the viscosity of the fluid to distribute, which must not mean a restriction of the range of this patent.

But sometimes it can be necessary to distribute a fluid with a low viscosity, or it's necessary to distribute a high flow rate of this one, or both circumstances take place simultaneously. So this invention considers the alternative of a double distributor disc, of symmetric design, that is appropriate for the application of flow rates of relatively high fluids, or application of a fluid similar to the water's viscosity. This distributor joins with the motor axis through a bucket of cylindrical shape that has a hollow to hold such axis. From this bucket, two spokes that support the double disc come out. This disc is essentially symmetrical in relation to the level which contain this spokes.

The double disc is made up of two trunks of opposite hollow cones joined by its smallest spoke through a cylindrical body. In the biggest spoke (open), from each of these truncated cones there's a multiplicity of isosceles triangles, which function is to break the sheet of fluid to obtain an homogeneous population of small droplets of an appropriate size. In the working position, the distributor disc is placed vertically, so the aforementioned spokes of unity between bucket and distributor disc occupy an horizontal level. Once it is operated, the fluid reaches the rotor bucket by gravity. From here, it's distributed by centrifugal force and following the level of the spokes to the internal wall of the distributor disc, reaching its upper and bottom edges.

The fluid's flow from the injection spot (on the upper part) up to the bottom half is produced through the hollows between the spokes. Precisely the section of pass resultant in this point is dimensioned in proportion to the predicted working flow rate, so that it allows the flow of approximately half of this flow rate. According to the rotation of the distributor disc, the teeth that occupy the main spoke of the hollow trunk of cone achieve an angular speed that is always higher to any other part of the rotor, which presents an advantage: it avoids the fluid that reaches the serrated edge to flow throughout the external surface of the walls of the distributor disc.

In the application of low viscosity fluids, when the flow rate to distribute is not very high, the design of this rotor can be simplified, eliminating its upper part, so the application is made only through the teeth placed in the bottom part of the rotor.

Another alternative that permits a higher adaptation of the rotor to the liquid over the one that acts is a conical distributor, in which the above-mentioned rotor has a conical shape. In the smallest diameter of the cone trunk, the rotor is closed by a flat face that on its centre incorporates a bucket to hitch to the motor axis. In the internal part, this surface has some radial protuberances which improve the fluid's distribution. The rotor presents an internal flat wall that when the centrifugal force is applied, permits the rise of the fluid in a homogeneous and balanced way. To improve the spraying of the fluid, the rotational disc has throughout its edge of biggest diameter a series of teeth in shape of isosceles triangle that carry out the function of breaking in a controlled way the sheet of ascending fluid, contributing to the formation of droplets of an even size. The combination of these characteristics allows the disc to distribute high flow rates of fluid of high viscosity.

On the other hand, the way of holding of the rotor to the motor's axis is resolved by a coaxial hollow which shape is complementary to that of the disc's bolt fixation, which is described latter in this document, and that allows a precise assemble of the rotor, that stays perfectly aligned with the motor's axis.

The detailed analysis of the possibilities of use and composition permits to conclude that it is known that to a higher diameter of the distributor disc we usually obtain a greater width in the fluid's distribution, in virtue of a higher angular peripheral speed for some determined revolutions of the motor. However, there are restrictions of different sort that avoid the rotor's diameter to increase in a limitless way.

Therefore, this patent contemplates the development of a distributor rotor designed to obtain a great width of spraying with a diameter of rotor contained. To achieve this purpose, a rotor with a cylindrical shape has been conceived, with a closed and flat basis, while that the other base of this cylinder is open, and stays in the upper part when the distributor rotor is in working position. The fluid product to distribute reaches the rotor at the point were the motor's axis is placed, from where it's distributed through all the internal surface of the rotor. This surface is smooth, to induce the fluid to form a film of constant thickness throughout all the internal face of the cylinder, so that the product to distribute reaches the upper edge homogeneously. This way, from the cylinder's upper edge and by effect of rotation of the rotor, the fluid comes out in form of small droplets. To achieve a spectrum of droplets of controlled and homogeneous size, the edge of the disc presents a large number of isosceles triangles, which quantity and dimension determine the size of the droplet achieved in the spraying.

For its fixation to the motor's axis, on the bottom base there's a coaxial bucket to the axis of revolution of the cylinder and with a central truncated hollow cone, dimensioned to hold the whole for its fixation to the motor's axis, set that is described below this report, and that allows a precise assemble of the rotor, that stays perfectly aligned with the motor's axis.

Any of the rotors described in the development of this descriptive report compose the distribution discs, and so act coupled to the rotation axis, being the system of fixation or hitching of such discs to the motor set of the sprayer or fundamental element to assure its operation. The fixation system of the rotor that this patent presents achieves a steady and precise fixation, with the additional advantage that it can be made without mediation of any tool, only with the hand. In other designs, the distributor disc is usually hitched directly to the motor's rotation axis, thanks to an accommodation that is slightly lower in internal diameter than in external diameter of the motor's axis, so the fixation between both elements is achieved by pressure joint, sufficiently strong as to guarantee that the disc doesn't release in its rotational movement neither because of knocks and vibrations. This way, the assemble must be done forcing the axis entrance into the disc's accommodation, which can cause deformations in both the motor's axis and the distributor disc itself (more harmful if the dimensions of the rotor are greater). In any case, according to this system, the assembling and dismounting of the disc doesn't guarantee a correct alignment of the spraying disc, which can result (as it has been said) in a defective distribution of the liquid to spray.

In accordance with the proposed improvement, the spraying disc hitches to the motor's axis through a pair of pieces composed of a screwed bolt and a nut. The screwed bolt has a special feature: instead of head, the opposite side of the screw finishes in shape of truncated cone with a cylindrical coaxial hollow and a cut in the same direction. This cylindrical axial hollow has a specific depth, and a diameter similar to the motor's axis, to where the bolt is fixed as it stays inserted in the central hollow of the distribution disc that also has shape of truncated cone. In virtue of the union of the bolt's head and the disc's hollow, as the nut is screwed over the screwed prolongation, the disc moves throughout such shoot, causing that it tights over the motor's rotation axis (thanks to a flexibility which allows its groove in the axial direction). The depth of the bolt's cylindrical hollow is the one that determines the distance that penetrates the motorised axis in the distributor disc.

This assembly presents advantages that resolve satisfactorily the problems of a direct fixation between the disc and the rotation axis. Particularly, through this system the disc can be placed gently, and later tighten the nut and fix it firmly to the rotation axis, without forcing any of the elements of the set. When it comes to dismounting, it's enough to act oppositely, loosing the nut and withdrawing the set of disc, bolt and the own nut. In accordance with another of the characteristics of the invention, it has been planned that the nut has projections in its periphery, to improve the support in the moment of its manipulation.

### Description of the illustrations

With the aim to facilitate the understanding of the characteristics of the improvements which are shown in this patent, the description is complemented with a series of drawings that illustrate the descriptive report, in accordance with an example of priority action of a practical making of such improvements. The attached illustrations comply with the aim of illustrating a priority action, which shouldn't constitute a limitation of the reach of this invention patent. With this purpose, the following has been represented:
FIGURE 1- Plan of an improved low volume sprayer.
FIGURE 2- Section of the screwed piece which acts as support and lid of the tank of fluid and of valve of emptiness and respiration.
FIGURE 3- Exploded isometric projection of the strap's set and its complements and of the protective hood.
FIGURE 4- Isometric projection of the strap's set and its complements, already assembled in the hood.
FIGURE 5- Plan of set of the distributor head.
FIGURE 6- Lower view and lengthwise section of the distribution chamber.
FIGURE 7- Lower view and lengthwise section of the truncated cone shaped component.
FIGURE 8- Plan and section view of the distributor rotor of wings, with stepped design in the wings.
FIGURE 9- Section view of a distributor disc of wings (without stepped design), cut to appreciate the details of a possible constructive solution.
FIGURE 10- Side view of a double distributor rotor.
FIGURE 11- View in detail of the bucket of a double distributor disc.
FIGURE 12- Side view of a double distributor rotor without its upper part.
FIGURE 13- Side view of a conical distributor disc.
FIGURE 14- Upper and plan view of the nut.
FIGURE 15- Upper and plan view and of the bolt.
FIGURE 16- View of a conical distributor rotor.
FIGURE 17- View of a constructive solution in which a set of bolt and screw are used to support a distribution rotor to the motor axis of the distribution head.

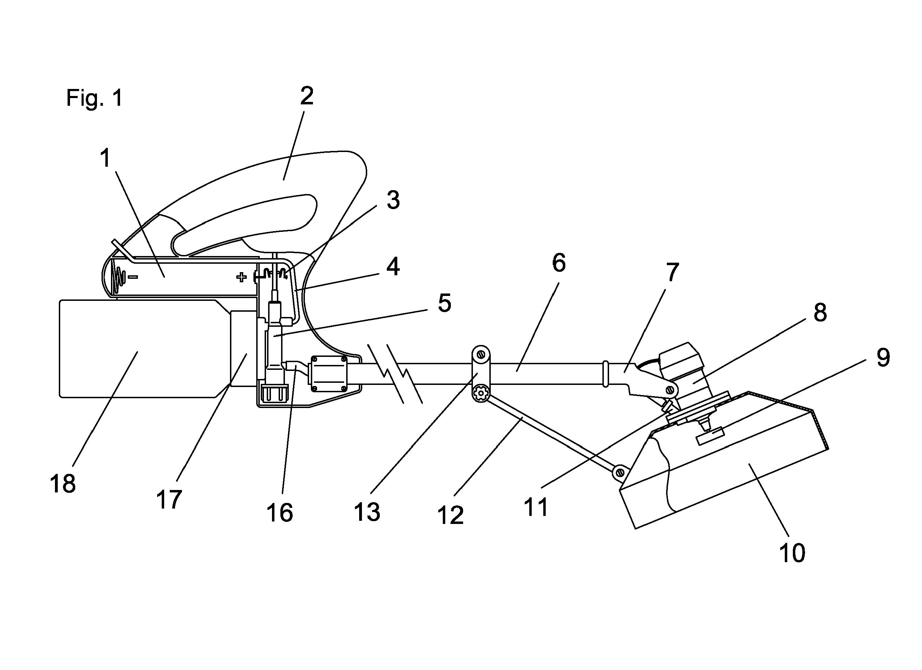

FIGURE 1 shows how a low volume sprayer improved is made. In it, it's distinguished how its handle (2), for the use, has the batteries holder integrated (1) and other components like the piece (17) which sometimes acts as support and lid of the tank (18), and that also holds the mechanism that simultaneously activates the electric switch (3) and the double valve (5) that allows the flow of fluid to apply (which is moved about through the exit tube (16) up to the nozzle) (11), and of air that arrives through the vent's tube (4). A tube or a lance (6) of the appropriate length connects the handle batteries holder with the spraying head (8), which holds to such tube through a fork (7), so that the head swings over this union. The distribution rotor (9) holds to the motor axis of the electric motor, while a hood (10) of protection covers both the aforementioned distribution rotor and the product that is finally sprayed in the normal operation of the spraying equipment. This hood links in its central part to the spraying head, and has some wings in one of its edges which are tied to a strap of support (12) which point of anchoring to the tube is adjustable through a clamp that can be adjusted (13), so that the position of the set hood-head in relation to the rest of the set can be regulated at will, manipulating the screw with the hand.

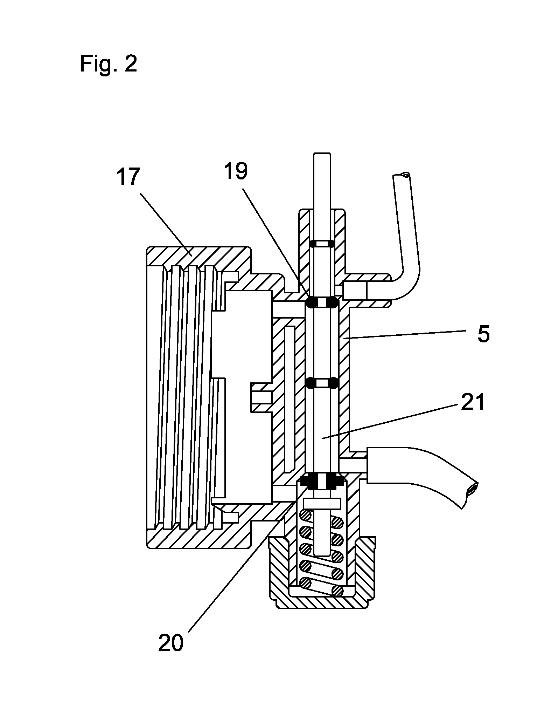

FIGURE 2 shows a section of the screwed piece (17) that complies with the functions of container support or of tank of fluid; of lid of this tank and of valve of emptiness and respiration (5). As it has been said, this piece is fixed to the handle's batteries holder. In the illustration we see how the valves that activate the vent and the exit of fluid, respectively, are integrated in a same component (21), of linear displacement. As we can gather from what is shown in the descriptive report, the valves open or close simultaneously, so the torical joint (19) that acts as valve of the vent determines the end of the component's race. This way, another joint (20), by its special configuration, (which gives great flexibility to it) is able to achieve the double function of regulating the flow of the fluid to spray and of absorbing the tolerances of construction and assemble of all the elements of the set.

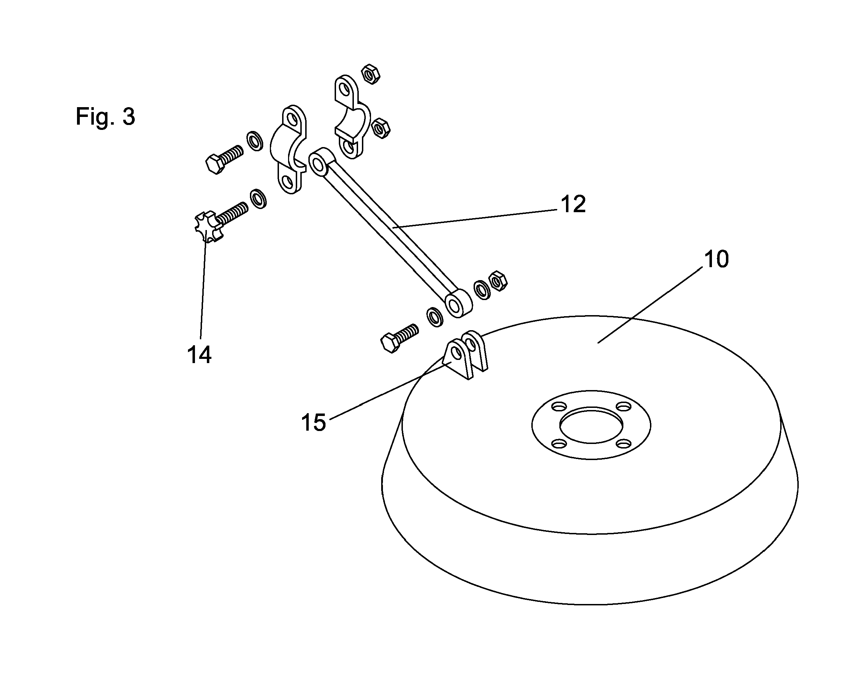

FIGURE 3 shows in isometric projection a picture of the straps set (12) and its complements, which links to the wings (15) of the hood (10) with the sprayer's tube. As it has been described in the preceding report, the functions of this strap are to reinforce the hitching of the protective hood and to regulate the relative position of the set hood-head of distribution in relation to the handle's batteries holder, to permit to adapt the configuration of the spraying equipment to the physiognomy of the worker and to the working conditions. This way, the clamp is easily adjustable since one of its screws (14) that hitches both halves of such clamp, has a modified head so we can loose it or tight it at will with no need of tools.

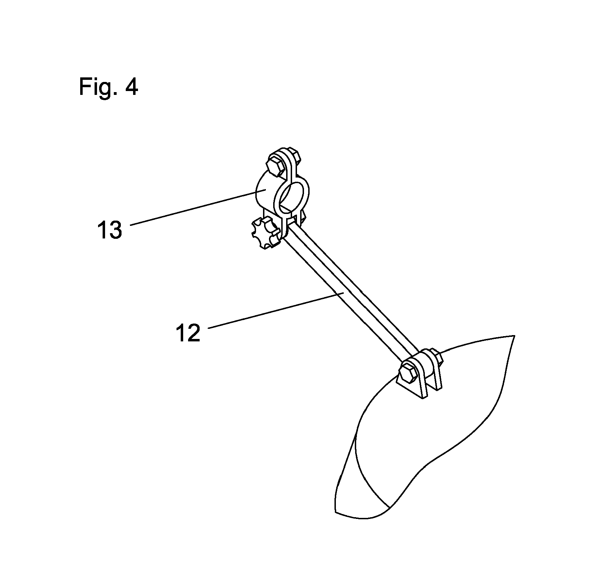

FIGURE 4 represents an isometric projection of the strap's set (12) along with the adjustable clamp (13), once assembled.

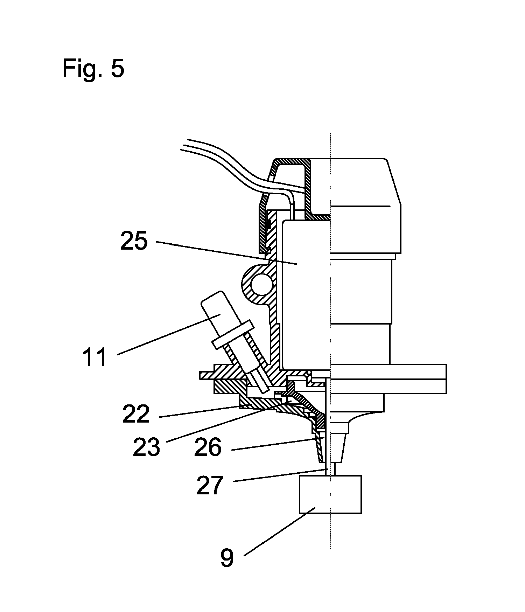

FIGURE 5 is an illustration of the set of the distributor head, which presents in detail the configuration and disposition of the different elements that make it up. According to the previous descriptive report, the chamber of distribution (22) has practically a truncated cone shape, and presents a smooth internal surface, with a regular stepped design which function is to distribute and to roll the fluid that is injected by the calibrated nozzle (11) in a peripheral spot. In order to collaborate to the guide and distribution of the fluid through the distribution chamber, a complementary piece (23) is fitted between this chamber and the motor's accommodation (25), so it protects this last one and the electric connections of the harmful action of the fluid. This way, the fluid to spray flows through the space (26) that is between the bottom exit of the distribution chamber, and the own motor axis (27), reaching the distribution rotor (9) in the optimum spot (in the nearest spot to its rotation axis).

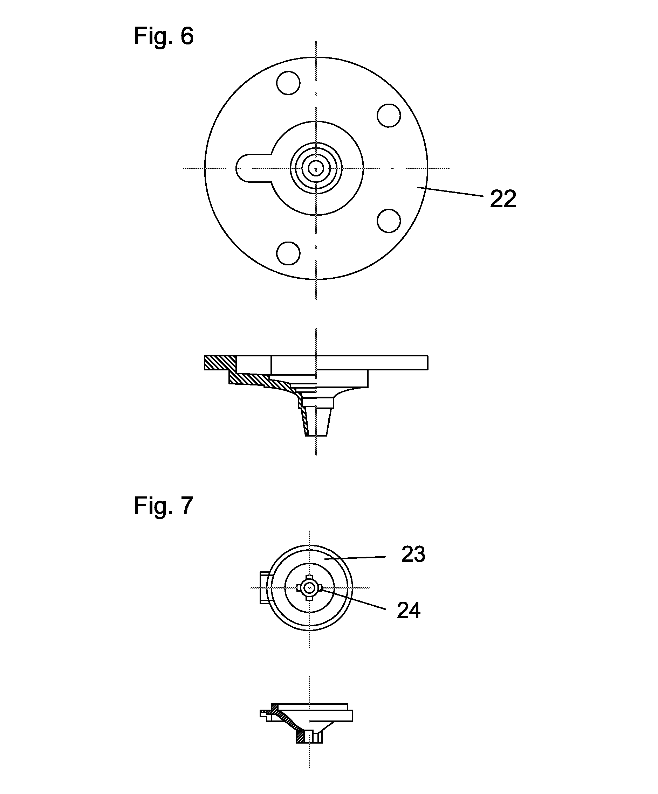

The chamber of distribution appears in FIGURE 6 (22), in lower view and front cut, so we can see the stepped design of the internal surface.

FIGURE 7 represents the truncated cone shape piece (23), with a cut that permits to distinguish its interior. In the figure we also see the turrets (24), which facilitate the axial alignment of the piece with the set of the distribution head.

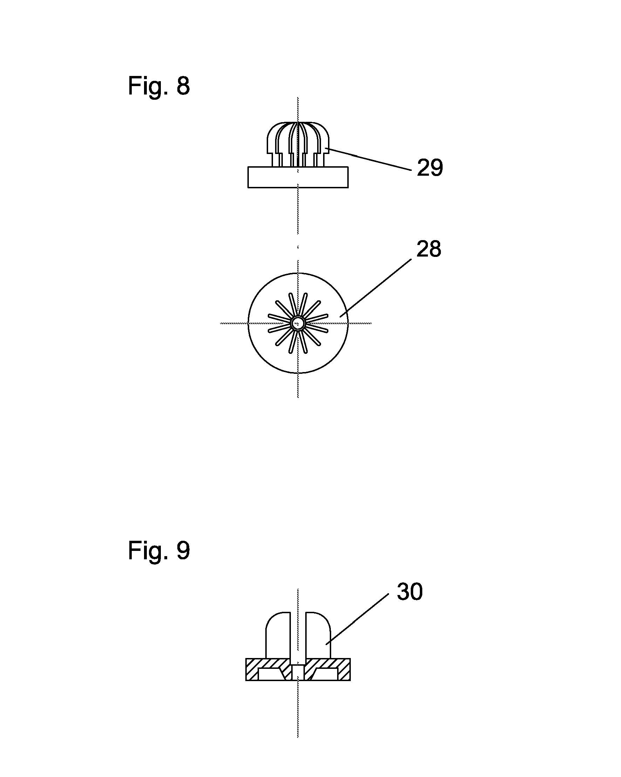

FIGURE 8 represents the distributor rotor of wings (28). As it is described in the report, this rotor has a special feature, it doesn't have a bucket to insert the motor's axis. For the contrary, the fixation of such rotor is produced by the adjustment of the motor axis in the hollow that stays clearly defined by the confluence of the wings (29) of radial position and with a stepped design in its bottom part, while that the discoidal base carries out the only function of hitching the multiple wings.

FIGURE 9 represents a cut of the distributor rotor of wings, in which the wings don't present bottom stepped design (30).

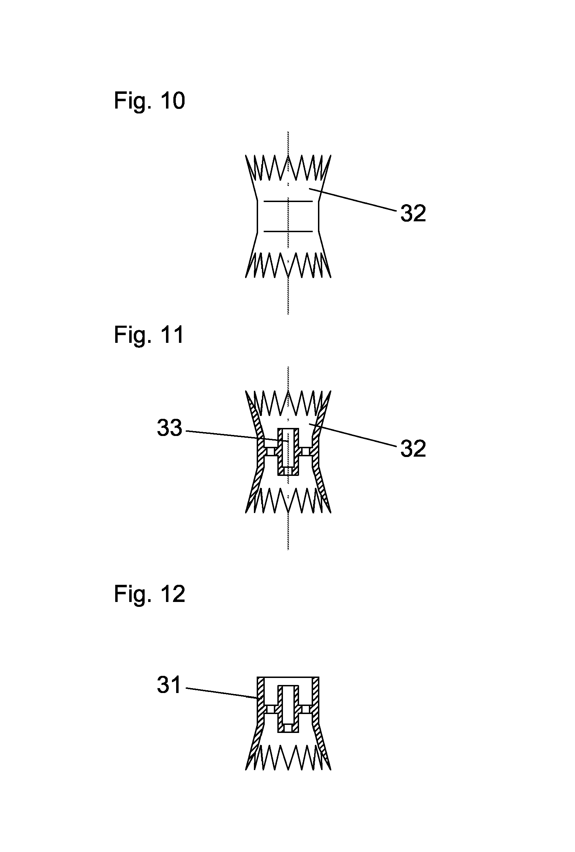

The double distributor rotor (32) is represented in FIGURE 10, its special feature is the double, so the faces of greater diameter, opened, have an edge finished in a multiplicity of isosceles triangles, that with the electric motor activated achieve a tangential speed higher to that one of any other spot of the distribution rotor.

As we can see in FIGURE 11, the double distributor rotor (32) is fixed by a bucket (33) with shape of hollow cylinder.

FIGURE 12 represents a distributor rotor (31), inspired in the double distributor rotor, which design has been simplified, eliminating its upper part. As it has been said, this distributor rotor is suitable for the distribution of relatively low flow rates of low viscosity fluid.

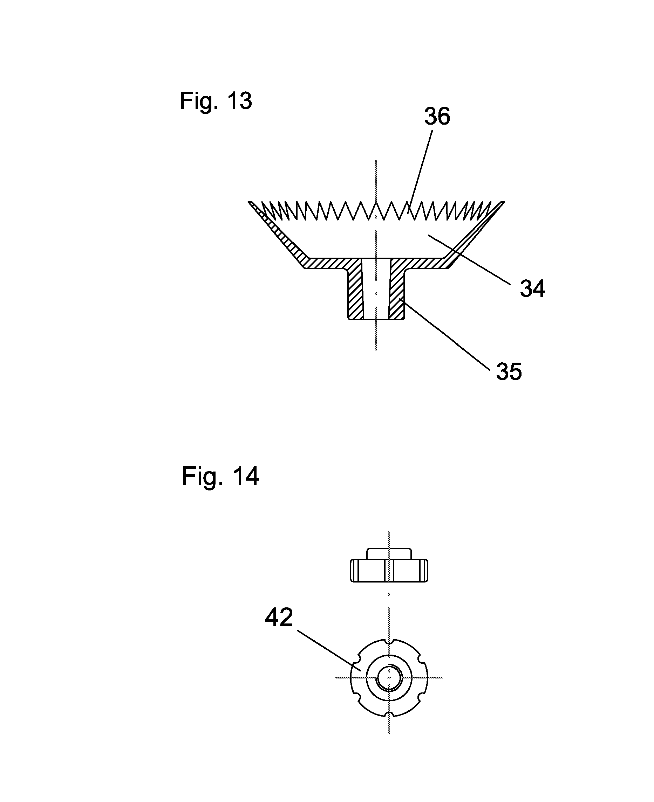

In FIGURE 13 we see a cut of the conical rotor distributor (34), serrated in isosceles triangle (36), that as we can see, also incorporates a coaxial bucket (35) for its fixation to the motor axis, with the particularity that this fixation is made through the set (previously described) of bolt and nut.

FIGURE 14 represents the nut (42) that is screwed to the bolt and permits the fixation of the distributor rotor to the motor axis.

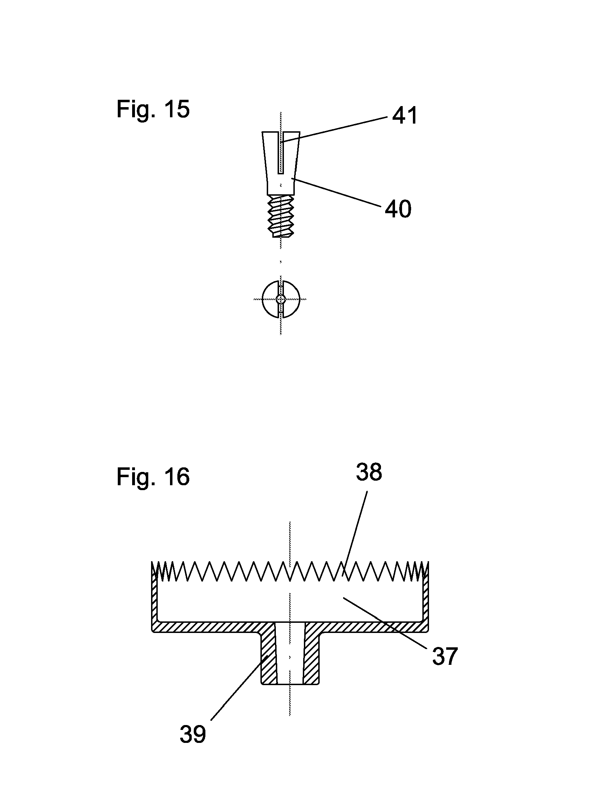

FIGURE 15 represents the bolt (40), that in virtue of the flexibility that gives the groove (41) and of its design in general, permits an easy and precise assembly of certain distributor rotors to the motor's axis.

FIGURE 16 shows the cylindrical distributor rotor (37) (represented in a cut), in which the even surface of the cylinder's walls stands out, with its upper part serrated (38) made up of a series of isosceles triangles of dimensions adequate to the searched size of the droplet. The central bucket (39) (with hole) is the one that accommodates the anchoring system (represented in the next FIGURE).

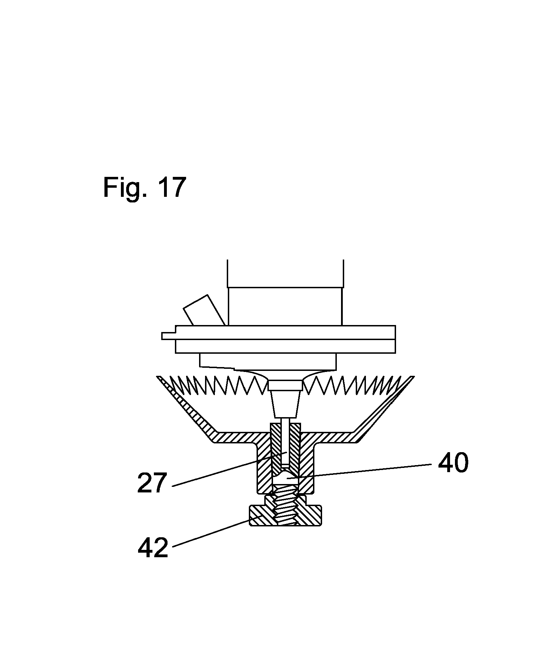

Finally, a constructive solution that represents the fixation system of certain distribution rotors to the motor axis (27) of the sprayer, through the use of the set of bolt (40) and nut (42) is showed in FIGURE 17.

There's no need of making this description more extensive so that any expert in the subject understands the significance of the invention and the advantages that derive from it. The materials, shape, size and arrangement of the elements will be liable to vary as long as it doesn't mean an alteration in the essentiality of the invention. The terms in which this report has been written must always be considered in a broad sense; not limited.

## Claims

1. IMPROVEMENTS INTRODUCED IN LOW VOLUME SPRAYERS which are made up by a lance (6) that integrates the rest of the components, just as the compartment for the batteries (1) that feed the motor; the handle of use (2) and the distribution head (8), which accommodates the motor (25) that provides the distributor rotor of movement (9). This rotor runs on a pipe (16) that in its other end connects to the container of product (18) through a passing valve (5), **characterized in that** the piece (17) that sometimes acts as support and lid of the fluid's container and of exit valve, where there is a vent that opens and closes with another valve (19) that activates simultaneously to the aforementioned valve of exit of the liquid and that communicates by one side with the container (18) and by the other one with the atmosphere, through a tube (4) of small section. Since both valves act in a linear and sharing way, at least one of them has a gasket (20) which design of double thickness provide to it the necessary flexibility, without detriment of the closing's security, to absorb the possible tolerances of fabrication of the elements that make up the aforementioned set.

2. IMPROVEMENTS INTRODUCED IN LOW VOLUME SPRAYERS, according to demand 1, which can incorporate a hood of protection (10) for its use in sensitive crops in the biocide action of the pesticide products used, **characterized in that** they have a strap (12) that hitches on an end (of rigid shape but articulated) to some wings (15) placed in the hood of protection, so that it complements and reinforces the direct joint between the aforementioned hood and the sprayer's distribution head (8). This strap is hitched on its other end to a lance of the spraying equipment with a clamp (13) of adjustable position, so that in virtue of the position of such clamp, it achieves a certain orientation of the hood and the distribution head in relation to the lance of the spraying equipment.

3. IMPROVEMENTS INTRODUCED IN LOW VOLUME SPRAYERS, according to previous demands, that incorporate a distribution chamber (22) intended to improve the transit between the point of injection of fluid by a calibrated nozzle and the distributor disc, **characterised in that** a piece essentially with truncated cone shape (23) that collaborates in the fluid's piping and in the protection of the electric motor (25) is located between the accommodation of the aforementioned motor and the distribution chamber, that at the same time incorporates a regular and concentric stepped design in its internal face, leaving a space of exit of the fluid (26) (of toroidal section) between the own chamber and the axis (27) of operation of the distributor rotor (9).

4. IMPROVEMENTS INTRODUCED IN LOW VOLUME SPRAYERS, according to previous demands, **characterised in that** a distributor rotor (28) suitable to spray fluids of high viscosity presents a multiplicity of wings (29) that are distributed radially to the axis of symmetry of the aforementioned rotor, leaving a hollow between them to accommodate to the motor axis (27), and that link in its bottom part by means of a discoidal base, in such a way that the shape of the hollow limits the depth of insertion to the motor axis in the distributor rotor.

5. IMPROVEMENTS INTRODUCED IN LOW VOLUME SPRAYERS, according to previous demands, **characterised in that** a double distributor rotor (32) (suitable for the spraying of flow rates relatively high and fluids not very viscous) hitches to the motor axis (27) in a cylindrical bucket (33) and presents a shape essentially symmetrical between the three axis of three-dimensional space, so the triangular teeth located in the upper and lower edge (the ones of highest diameter) of each of the trunks of cone (according to this truncated cone shape) have an angular speed higher to any other point of the aforementioned disc. This way, the centrifugal force avoids the fluid to spray to take another direction than that one of reaching the aforementioned teeth, from where it's sprayed in fine droplets of even and controlled size.

6. IMPROVEMENTS INTRODUCED IN LOW VOLUME SPRAYERS, according to previous demands, **characterised in that** a distributor rotor (31) (derived from the double distributor rotor) (32), suitable for the spraying of moderated flow rates of not very viscous fluids and that hitches to the motor axis (27) in a cylindrical bucket joined to a hollowed cylinder that surrounds it and that extends downwards with shape of trunk of cone inverted, has triangular teeth positioned in the bottom edge (of higher diameter), so the fluid provided over the rotation axis flows through the internal walls until it reaches the aforementioned teeth, from where it is finally sprayed in droplets of even and controlled size.

7. IMPROVEMENTS INTRODUCED IN LOW VOLUME SPRAYERS, according to previous demands, **characterised in that** the distributor rotor (34) (suitable to spray relatively high flow rates of fluid of high viscosity) has a truncated cone shape with a smooth internal surface and which its highest edge of diameter extends in a multiplicity of serrated isosceles triangles (36). This one has in its bucket (35) of hitch to the motor axis a conical hollow of equal relation of union to the fixation component to the aforementioned axis.

8. IMPROVEMENTS INTRODUCED IN LOW VOLUME SPRAYERS, according to previous demands, **characterised in that** the distributor rotor (37) (suitable to obtain a high distribution width) has a cylindrical shape with a smooth internal wall, which upper base is open and extends in a multiplicity of isosceles triangles (38) (serrated), and which bottom base incorporates a bucket (39) of hitch to the motor axis with a truncated cone hollow of the same relation with the fixation component to the aforementioned motor axis.

9. IMPROVEMENTS INTRODUCED IN LOW VOLUME SPRAYERS, according to previous demands, **characterised in that** the distributor rotor, with a conical-shape hollow in the place where must be fixed to the motor axis, hitches to the aforementioned motor axis by means of a screwed bolt (40), where the head finishes in shape of truncated cone with a cylindrical coaxial hollow (with similar diameter than the motor axis) and a slot (41) in the same direction, and where the screwed prolongation must fit with the tightening nut (42), so the tightening of the nut generates the distributor rotor to slide over the screwed bolt, which squeeze together with the motor axis.
